# EUROPEAN PATENT APPLICATION

(11) **EP 4 765 399 A1**
(43) Date of publication of application: **24.06.2026**
(21) Application number: 24861467.9
(22) Date of filing: 22.03.2024
(51) Int. Cl.: H01M 50/244, H01M 10/613, H01M 10/42, H01M 10/6567, H01M 10/6556

(54) **CONTROL APPARATUS AND ELECTRIC DEVICE**

(30) Priority: 08.09.2023 CN 202311162541
(71) Applicant: Contemporary Amperex Intelligence Technology (Shanghai) Limited, Shanghai 201306 (CN)
(72) Inventor: LU, Wei, Shanghai 201306 (CN); ZHANG, Dapeng, Shanghai 201306 (CN)
(74) Representative: Gong, Jinping
(86) International application number: PCT/CN2024/083392
(87) International publication number: WO 2025/050616

(57) **Abstract**

The present application provides a control apparatus (100) and an electric device. The above control apparatus (100) includes a box (110), a battery (120), a low-voltage power distribution module (130), and a heat management module (140). The battery (120) is electrically connected to the low-voltage power distribution module (130). The low-voltage power distribution module (130) is configured to be electrically connected to an electric appliance (200). The battery (120), the low-voltage power distribution module (130), and the heat management module (140) are accommodated in the box (110).

## Description

### CROSS-REFERENCE TO RELATED APPLICATIONS

The present application claims priority to the Chinese Patent Application No. 202311162541.X filed on September 8, 2023 and entitled "CONTROL APPARATUS AND ELECTRIC DEVICE", which is incorporated herein by reference in its entirety.

### TECHNICAL FIELD

The present application belongs to the technical field of control apparatuses, and more specifically relates to a control apparatus and electric device.

### BACKGROUND

Electric devices are devices that are entirely or partially powered by electrical energy. In an example in which an electric device is a vehicle, an engine compartment of the vehicle has a relatively small internal space. However, functional apparatuses such as power apparatuses, power supply apparatuses, and cooling apparatuses need to be accommodated inside the engine compartment, making it difficult to design the spatial layout of the engine compartment. It can be seen that how to increase the space utilization rate of electric devices is an urgent technical problem to be solved.

### SUMMARY

One of the objectives of embodiments of the present application is to provide a control apparatus and electric device to solve the technical problem of low space utilization rate of electric devices in the related art.

To achieve the above objective, a technical solution adopted by the embodiments of the present application is as follows. A control apparatus is provided, including a box, a battery, a low-voltage power distribution module, and a thermal management module, where the battery is electrically connected to the low-voltage power distribution module, the low-voltage power distribution module is configured to be electrically connected to an electric appliance, and the battery, the low-voltage power distribution module, and the thermal management module are accommodated in the box.

The control apparatus provided by these embodiments of the present application has at least the following beneficial effects: in the control apparatus provided by these embodiments of the present application, the battery, the low-voltage power distribution module, and the thermal management module are accommodated in the box, so that the battery, the low-voltage power distribution module, and the thermal management module are integrated into an integral body. As compared to a manner in which the battery, the low-voltage power distribution module, and the thermal management module are dispersedly arranged, there is no need to separately allocate assembly space for the battery, the low-voltage power distribution module, and the thermal management module, effectively saving the assembly space in the control apparatus. In addition, there is no need to separately configure housings for the battery, the low-voltage power distribution module, and the thermal management module, effectively reducing the volume of the control apparatus, and making the overall structure of the control apparatus more compact, thereby effectively increasing the space utilization rate of an electric device using the above control apparatus.

In some embodiments of the present application, the control apparatus further includes a cooling module, the cooling module is disposed between the low-voltage power distribution module and the thermal management module, and the low-voltage power distribution module and the thermal management module are in thermal-conduction connection with the cooling module.

By adopting the above technical solution, the low-voltage power distribution module and the thermal management module can share one cooling module, effectively reducing the number of the cooling modules, and further reducing the volume of the control apparatus, thereby further increasing the space utilization rate of an electric device using the above control apparatus.

In some embodiments of the present application, the cooling module includes a liquid cooling plate, a liquid inlet joint, and a liquid outlet joint. A cooling flow channel is provided inside the liquid cooling plate, the low-voltage power distribution module and the thermal management module are in thermal-conduction connection with the liquid cooling plate, the liquid inlet joint is connected to a liquid inlet end of the cooling flow channel, and the liquid outlet joint is connected to a liquid outlet end of the cooling flow channel.

By adopting the above technical solution, the efficiency of the cooling module in cooling the low-voltage power distribution module and the thermal management module is effectively improved, thereby effectively improving the reliability of the control apparatus.

In some embodiments of the present application, a sidewall of the box is provided with a first socket, an inner edge of the first socket is provided with a first sealing groove, the liquid inlet joint includes a first sealing portion disposed in the first socket, a first rib protrudes from a peripheral side of the first sealing portion, and the first rib is inserted into the first sealing groove.

By adopting the above technical solution, the liquid inlet joint can pass through the first socket and seal the first socket, effectively improving the sealing performance of the control apparatus. In addition, there is no need to additionally provide a sealing member to seal the first socket, effectively simplifying a sealing structure of the control apparatus and an assembly process of the control apparatus.

In some embodiments of the present application, a second rib and a third rib protrude from the peripheral side of the first sealing portion. The second rib, the first rib, and the third rib are spaced apart along a length direction of the liquid inlet joint, the second rib abuts against an outer wall of the box, and the third rib abuts against an inner wall of the box.

By adopting the above technical solution, the sealing performance of the control apparatus is further improved.

In some embodiments of the present application, the sidewall of the box is provided with a second socket, an inner edge of the second socket is provided with a second sealing groove, the liquid outlet joint includes a second sealing portion disposed in the second socket, a fourth rib protrudes from a peripheral side of the second sealing portion, and the fourth rib is inserted into the second sealing groove.

By adopting the above technical solution, the liquid outlet joint can pass through the second socket and seal the second socket, effectively improving the sealing performance of the control apparatus. In addition, there is no need to additionally provide a sealing member to seal the second socket, effectively simplifying the sealing structure of the control apparatus and the assembly process of the control apparatus.

In some embodiments of the present application, a fifth rib and a sixth rib protrude from the peripheral side of the second sealing portion. The fifth rib, the fourth rib, and the sixth rib are spaced apart along a length direction of the liquid outlet joint, the fifth rib abuts against the outer wall of the box, and the sixth rib abuts against the inner wall of the box.

By adopting the above technical solution, the sealing performance of the control apparatus is further improved.

In some embodiments of the present application, the control apparatus further includes a box cover covering an open end of the box, an annular rib protrudes from a side of the box cover facing the box, a third sealing groove extending along a circumferential direction of the open end is provided at the open end, and the annular rib is inserted into the third sealing groove.

By adopting the above technical solution, a gap between the box cover and the box is effectively sealed, thereby effectively improving the sealing performance of the control apparatus.

In some embodiments of the present application, the open end is provided with a first socket and a second socket; the liquid inlet joint includes a first sealing portion disposed in the first socket; the first sealing portion is provided with a fourth sealing groove; the liquid outlet joint includes a second sealing portion disposed in the second socket; the second sealing portion is provided with a fifth sealing groove; the third sealing groove, the fourth sealing groove, and the fifth sealing groove are in communication to form an annular groove; and an annular rib is inserted into the annular groove.

By adopting the above technical solution, a gap between the box cover and the box can be sealed, and the first socket and the second socket may also be sealed, effectively improving the sealing performance of the control apparatus. In addition, there is no need to additionally provide sealing members to seal the first socket and the second socket, effectively simplifying the sealing structure of the control apparatus and the assembly process of the control apparatus.

In some embodiments of the present application, the liquid cooling plate is provided with an avoidance opening, the low-voltage power distribution module has a first wiring terminal, the thermal management module has a second wiring terminal, and the first wiring terminal and/or the second wiring terminal passes through the avoidance opening.

By adopting the above technical solution, the first wiring terminal and/or the second wiring terminal can pass through the avoidance opening. This facilitates connection of the first wiring terminal and/or the second wiring terminal to an external cable without needing to avoid the first wiring terminal and/or the second wiring terminal by staggering the low-voltage power distribution module and/or the thermal management module with the liquid cooling plate, and making the overall structure of the control apparatus more compact, thereby further increasing the space utilization rate of an electric device using the above control apparatus.

In some embodiments of the present application, the low-voltage power distribution module, the cooling module, and the thermal management module are connected into an integral body.

By adopting the above technical solution, the low-voltage power distribution module, the cooling module, and the thermal management module may first be connected into an integral body, and then the integral body is assembled into the box, thereby effectively improving the assembly efficiency of the control apparatus.

In some embodiments of the present application, the control apparatus further includes a box cover, the box cover includes a cover body covering the open end of the box, and the cover body is a metal member.

By adopting the above technical solution, heat inside the box can be quickly conducted outward through the cover body, thereby effectively improving the heat dissipation performance of the control apparatus.

In some embodiments of the present application, the low-voltage power distribution module and/or the thermal management module is in thermal-conduction connection with the cover body.

By adopting the above technical solution, heat generated by operation of the low-voltage power distribution module and/or the thermal management module can be quickly conducted outward through the cover body, thereby effectively improving the efficiency in cooling the low-voltage power distribution module and/or the thermal management module. In addition, there is no need to additionally provide cooling components, effectively reducing the number of components of the control apparatus, effectively reducing the production costs of the control apparatus, and also further reducing the volume of the control apparatus, thereby further increasing the space utilization rate of an electric device using the above control apparatus.

In some embodiments of the present application, a heat conduction portion protrudes from a surface of the cover body facing the box, and the low-voltage power distribution module and/or the thermal management module is in thermal-conduction connection with the heat conduction portion.

By adopting the above technical solution, the cover body may be in full contact with the low-voltage power distribution module and/or the thermal management module, thereby further improving the efficiency in cooling the low-voltage power distribution module and/or the thermal management module.

In some embodiments of the present application, the cover body is provided with a wiring opening, the box cover further includes an insulating member disposed in the wiring opening, a wiring channel is provided inside the insulating member, the low-voltage power distribution module has a first wiring terminal, the thermal management module has a second wiring terminal, and the first wiring terminal and/or the second wiring terminal passes through the wiring channel.

By adopting the above technical solution, the first wiring terminal and/or the second wiring terminal is effectively insulated and separated from the cover body, thereby effectively improving the reliability of the control apparatus.

In some embodiments of the present application, the insulating member is injection molded in the wiring opening.

By adopting the above technical solution, a production process of the box cover is effectively simplified, thereby effectively improving the production efficiency of the control apparatus.

In some embodiments of the present application, the low-voltage power distribution module, the thermal management module, and the battery are stacked along a depth direction of the box.

By adopting the above technical solution, the low-voltage power distribution module, the thermal management module, and the battery can more fully utilize the internal space of the box, making the overall structure of the control apparatus more compact, thereby further increasing the space utilization rate of an electric device using the above control apparatus.

In some embodiments of the present application, the control apparatus further includes a first heat insulation member, where the first heat insulation member is disposed between the low-voltage power distribution module and the battery; and/or the control apparatus further includes a second heat insulation member, where the second heat insulation member is disposed between the thermal management module and the battery.

By adopting the above technical solution, heat generated by operation of the low-voltage power distribution module and/or the thermal management module is effectively prevented from being transferred to the battery, effectively reducing the risk of thermal runaway of the battery, thereby effectively improving the reliability of the control apparatus.

In some embodiments of the present application, the battery includes a battery body and a protection member, where the protection member covers a side of the battery body facing the low-voltage power distribution module and/or a side of the battery body facing the thermal management module.

By adopting the above technical solution, under a condition that an electronic element on the low-voltage power distribution module and/or an electronic element on the thermal management module explodes, fragments can be effectively prevented from impacting the battery body, effectively providing protection for the battery body, thereby effectively improving the reliability of the control apparatus.

In some embodiments of the present application, the low-voltage power distribution module includes a first circuit board, a low-voltage distribution circuit, and a battery management circuit, and the low-voltage distribution circuit and the battery management circuit are integrated on the first circuit board. Alternatively, the thermal management module includes a second circuit board, a thermal management circuit, and a battery management circuit, and the thermal management circuit and the battery management circuit are integrated on the second circuit board. Alternatively, the control apparatus includes a third circuit board and a battery management circuit, the low-voltage power distribution module includes a low-voltage distribution circuit, the thermal management module includes a thermal management circuit, and the low-voltage distribution circuit, the thermal management circuit, and the battery management circuit are integrated on the third circuit board.

By adopting the above technical solution, an integration degree of the control apparatus is effectively increased, the volume of the control apparatus is further reduced, and thus the space utilization rate of an electric device using the above control apparatus is further increased.

In some embodiments of the present application, the thermal management module is configured to be electrically connected to a thermal management actuator.

The use of the above technical solution helps to achieve control on the thermal management actuator.

An embodiment of the present application further provides an electric device, including an electric appliance and the control apparatus as described in any one of the above embodiments, where the electric appliance is electrically connected to the control apparatus.

The electric device provided by this embodiment of the present application has at least the following beneficial effects: the electric device provided by this embodiment of the present application adopts the control apparatus as described in any one of the above embodiments, thereby effectively increasing the space utilization rate of the electric device.

### BRIEF DESCRIPTION OF DRAWINGS

To more clearly illustrate the technical solutions in the embodiments of the present application, the drawings to be used in the description of the embodiments or the prior art are briefly introduced below. Obviously, the drawings described below are only some embodiments of the present application. For those of ordinary skill in the art, other drawings may also be obtained based on these drawings without creative efforts.
FIG. 1 is a schematic structural diagram of a vehicle according to an embodiment of the present application;
FIG. 2 is a schematic structural diagram of a control apparatus according to an embodiment of the present application;
FIG. 3 is a schematic structural exploded view of the control apparatus shown in FIG. 2;
FIG. 4 is a schematic structural diagram of a cooling module in the control apparatus shown in FIG. 3;
FIG. 5 is a schematic diagram of a sealing structure among a box, a box cover, and a cooling module in the control apparatus shown in FIG. 3;
FIG. 6 is a schematic structural diagram of a low-voltage power distribution module in the control apparatus shown in FIG. 3; and
FIG. 7 is a schematic structural diagram of a thermal management module in the control apparatus shown in FIG. 3.

In the drawings. the reference numerals are as follows:
1000. vehicle;
100. control apparatus; 110. box; 111. first socket; 112. second socket; 113. opening; 114. first sealing groove; 115. connection seat; 120. battery; 121. battery body; 122. protection member; 130. low-voltage power distribution module; 131. first circuit board; 132. first electronic element; 133. first wiring terminal; 140. thermal management module; 141. second circuit board; 142. second electronic element; 143. second wiring terminal; 150. cooling module; 151. liquid cooling plate; 1511. avoidance opening; 152. liquid inlet joint; 1521. first sealing portion; 15211. first rib; 15212. second rib; 15213. third rib; 15214. fourth sealing groove; 1522. first connection portion; 1523. second connection portion; 153. liquid outlet joint; 1531. second sealing portion; 1532. third connection portion; 1533. fourth connection portion; 160. box cover; 161. cover body; 1611. annular rib; 162. insulating member; 1621. wiring channel; 170. second heat insulation member;
200. electric appliance; and
300. vehicle body.

### DESCRIPTION OF EMBODIMENTS

In order to make the technical problems to be solved, the technical solutions, and the beneficial effects of the present application clearer, the present application is further described in detail below in conjunction with the accompanying drawings and embodiments. It should be understood that specific embodiments described herein are only used to explain the present application and are not intended to limit the present application.

It should be noted that when an element is referred to as being "fixed to" or "disposed on" another element, it can be directly on the another element or indirectly on the another element. When an element is referred to as being "connected to" another element, it can be directly connected to the another element or indirectly connected to the another element.

It should be understood that orientation or positional relationships indicated by the terms "length", "width", "upper", "lower", "front", "rear", "left", "right", "vertical", "horizontal", "top", "bottom", "inner", "outer", and the like are based on the orientation or positional relationships shown in the accompanying drawings, which are only for convenience of describing the present application and simplifying the description rather than for indicating or implying that the apparatus or element referred to must have a specific orientation or be constructed and operated in a specific orientation, and therefore should not be construed as limiting the present application.

In addition, the terms "first" and "second" are only used for descriptive purposes, and should not be understood as indicating or implying relative importance or implicitly indicating the number of technical features indicated. Therefore, features defined by "first" and "second" may explicitly or implicitly include one or more of the features. In the description of the present application, "multiple" means two or more, unless otherwise specifically defined.

With the continuous improvement of living standards, vehicles, as a transportation tool, have been widely popularized. A vehicle includes multiple electric appliances, such as a dashboard, an in-vehicle information system, vehicle lights, electric seats, audio, and a steering machine. A vehicle further includes multiple thermal management actuators, such as a water pump, a flow valve, a fan motor, and an air conditioning compressor. Currently, in a vehicle, a battery is typically used to provide electrical energy which is distributed to various electric appliances through a low-voltage power distribution module. For thermal management actuators, thermal management modules are also needed to drive and control the thermal management actuators.

In the related art, the battery, low-voltage power distribution module, and thermal management modules are usually distributed at different positions in the vehicle. Therefore, there is not only a need to separately configure installation structures for the battery, the low-voltage power distribution module, and the thermal management module but also a need to separately reserve safety distances for the battery, the low-voltage power distribution module, and the thermal management module, to reduce the risk of contact of the battery, the low-voltage power distribution module, and the thermal management module with other components while such contact causes large total space occupation of the battery, the low-voltage power distribution module, and the thermal management module. In addition, to protect the battery, the low-voltage power distribution module, and the thermal management module, there is typically a need to separately configure housings for the battery, the low-voltage power distribution module, and the thermal management module, so that the volume of the battery, the volume of the low-voltage power distribution module, and the volume of the thermal management module are increased. This further increases the total space occupied by the battery, the low-voltage power distribution module, and the thermal management module, thereby significantly reducing the space utilization rate of the vehicle.

To increase the space utilization rate of the vehicle, the battery, the low-voltage power distribution module, and the thermal management module of the control apparatus provided by the embodiments of the present application are accommodated in the box, so that the battery, the low-voltage power distribution module, and the thermal management module are integrated into an integral body. As compared to a manner in which the battery, the low-voltage power distribution module, and the thermal management module are dispersedly arranged, there is no need to separately allocate assembly space for the battery, the low-voltage power distribution module, and the thermal management module, effectively saving the assembly space in the control apparatus. In addition, there is no need to separately configure housings for the battery, the low-voltage power distribution module, and the thermal management module, effectively reducing the volume of the control apparatus, and making the overall structure of the control apparatus more compact, thereby effectively increasing the space utilization rate of the vehicle using the above control apparatus.

The control apparatus provided by the embodiments of the present application may be applied to electric devices. The control apparatus may be configured to distribute electrical energy to various electric appliances in an electric device, and may further be configured to drive and control various thermal management actuators in the electric device. Electric devices may be, but are not limited to, vehicles, portable devices, ships, spacecraft, electric toys, and electric tools. Vehicles may be fuel vehicles, gas vehicles, or new energy vehicles, where new energy vehicles may be battery electric vehicles, hybrid vehicles, extended-range vehicles, or the like. Spacecraft includes airplanes, rockets, space shuttles, spaceships, and the like. Electric toys include fixed or mobile electric toys, such as game consoles, electric toy cars, electric toy ships, and electric toy airplanes. Electric tools include electric metal cutting tools, electric grinding tools, electric assembly tools, and electric railway tools, such as electric drills, electric grinders, electric wrenches, electric screwdrivers, electric hammers, impact drills, concrete vibrators, and electric planers.

For convenience of description, an electric device according to one embodiment of the present application being a vehicle is used as an example for description in the following embodiments.

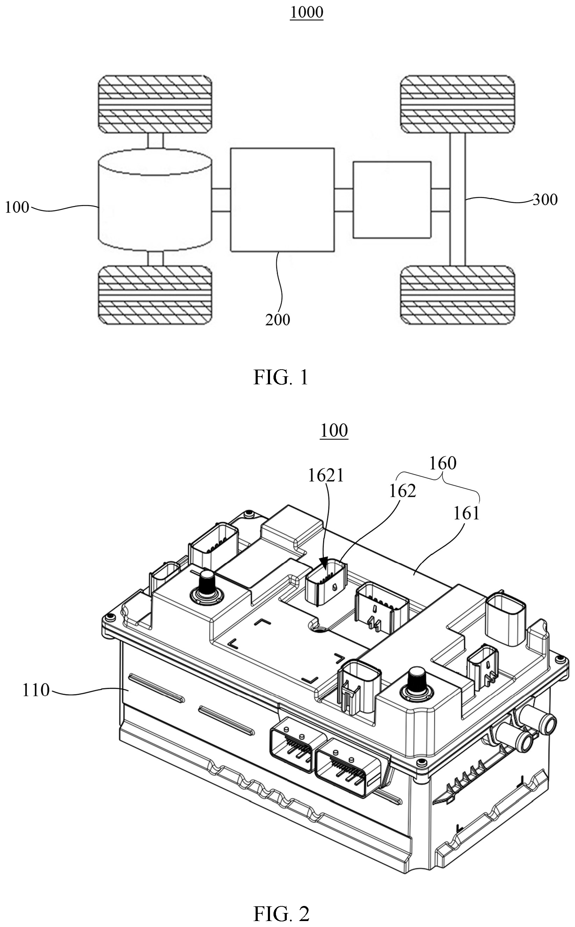

Referring to FIG. 1, FIG. 1 is a schematic structural diagram of a vehicle 1000 according to an embodiment of the present application. The vehicle 1000 may be a front-wheel drive vehicle, a rear-wheel drive vehicle, or a four-wheel drive vehicle. The vehicle 1000 includes a vehicle body 300, an electric appliance 200, a thermal management actuator, and a control apparatus 100.

The vehicle body 300 is a main support component of the vehicle 1000, and the vehicle body 300 has an engine compartment and a passenger compartment, where the engine compartment is configured to accommodate the control apparatus 100, a power apparatus, an electronic control apparatus, a cooling apparatus, and the like of the vehicle 1000, and the passenger compartment is configured to provide operating space and sitting space for passengers. When the vehicle 1000 is a front-wheel drive vehicle, the engine compartment is disposed at the front of the vehicle body 300, that is, the engine compartment is a front engine compartment; when the vehicle 1000 is a rear-wheel drive vehicle, the engine compartment is disposed at the rear of the vehicle body 300, that is, the engine compartment is a rear engine compartment; and when the vehicle 1000 is a four-wheel drive vehicle, the engine compartment is divided into a front engine compartment and a rear engine compartment, where the front engine compartment is disposed at the front of the vehicle body 300, and the rear engine compartment is disposed at the rear of the vehicle body 300. The passenger compartment is disposed between the front and the rear of the vehicle body 300.

There may be multiple electric appliances 200, and the electric appliances 200 may be, but are not limited to, a dashboard, an in-vehicle information system, vehicle lights, electric seats, and audio. The electric appliances 200 may be disposed in the passenger compartment of the vehicle body 300. For example, electric appliances 200 such as a dashboard, an in-vehicle information system, interior atmosphere lights, a vehicle-mounted refrigerator, and electric seats may be disposed in the passenger compartment of the vehicle body 300.

There may be multiple thermal management actuators, and the thermal management actuators may be, but are not limited to, water pumps, flow valves, fan motors, and air conditioning compressors. The thermal management actuators may be disposed in the engine compartment of the vehicle body 300. For example, an air conditioning compressor may be disposed in the engine compartment of the vehicle body 300.

The control apparatus 100 may be configured to distribute electrical energy to various electric appliances 200 in the vehicle 1000, and may also be used for drive control of thermal management actuators in the vehicle 1000.

The control apparatus 100 provided in this embodiment of the present application is described in conjunction with the accompanying drawings.

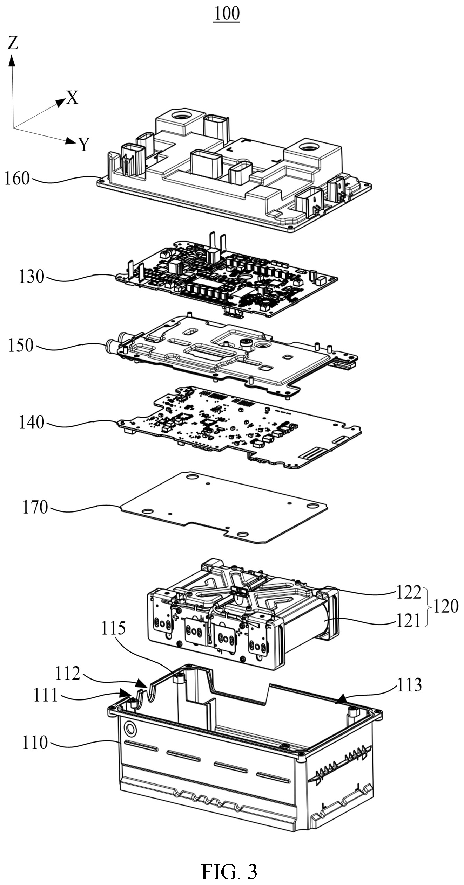

According to a first aspect, referring to both FIG. 2 and FIG. 3, an embodiment of the present application provides a control apparatus 100, including a box 110, a battery 120, a low-voltage power distribution module 130, and a thermal management module 140. The battery 120 is electrically connected to the low-voltage power distribution module 130, the low-voltage power distribution module 130 is configured to be electrically connected to an electric appliance 200, the thermal management module 140 is configured to be electrically connected to a thermal management actuator, and the battery 120, the low-voltage power distribution module 130, and the thermal management module 140 are accommodated in the box 110.

The box 110 is a component configured to provide an internal environment of the control apparatus 100, where the internal environment may be used to accommodate the battery 120, the low-voltage power distribution module 130, the thermal management module 140, and other functional components. The box 110 may be an integrally formed member, and an opening 113 may be provided on the box 110. The internal environment is in communication with an external environment of the box 110 through the opening 113, and the battery 120, the low-voltage power distribution module 130, the thermal management module 140, and other functional components can enter the internal environment through the opening 113. The shape of the box 110 may be, but is not limited to a rectangular parallelepiped, a cylinder, and a hexagonal prism. The material of the box 110 may be, but is not limited to, plastic, copper, iron, aluminum, stainless steel, and aluminum alloy. Under a condition that the material of the box 110 is metal, an insulating layer may be provided on an inner wall of the box 110 to insulate and separate electrical components such as the battery 120, the low-voltage power distribution module 130, and the thermal management module 140 from the box 110.

The control apparatus 100 may further include a box cover 160, where the box cover 160 covers an open end of the box 110 to isolate the internal environment from the external environment of the box 110. The box cover 160 and the box 110 may be fixedly connected through a connection structure, where the connection structure may be, but is not limited to, a fastening connection structure, a snap-fit connection structure, an interference fit structure, and an adhesive structure. The shape of the box cover 160 may be, but is not limited to, a rectangular parallelepiped, a cylinder, and a hexagonal prism. It can be understood that the shape of the box cover 160 matches the shape of the box 110. For example, under a condition that the shape of the box 110 is a rectangular parallelepiped, the shape of the box cover 160 is also a rectangular parallelepiped. The material of the box cover 160 may be, but is not limited to, plastic, copper, iron, aluminum, stainless steel, and aluminum alloy.

The battery 120 is a component configured to store electrical energy and provide electrical energy to the electric appliance 200. The battery 120 may include a battery cell. There may be multiple battery cells. The multiple battery cells may be connected in series, in parallel, or in series-parallel to form a battery body 121, where being connected in series-parallel refers to a combination of both a series connection and a parallel connection of the multiple battery cells. The multiple battery cells may be directly connected in series, in parallel, or in series-parallel, and then an integral body formed by multiple battery cells is accommodated in the box 110. Certainly, the battery 120 may alternatively be formed in a manner that multiple battery cells are first connected in series, in parallel, or in series-parallel to form a battery module, and multiple battery modules are then connected in series, in parallel, or in series-parallel to form an integral body that is accommodated in the box 110. Each battery cell may be a secondary battery or a primary battery, where the secondary battery refers to a battery cell that can continue to be used by activating an active material through charging after the battery cell is discharged, and the primary battery refers to a battery cell that cannot continue to be used by activating an active material through charging after the electrical energy of the battery cell is exhausted. The battery cell can alternatively be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, or the like, but is not limited thereto. The battery cell may be a cylindrical battery cell, a prismatic battery cell, a pouch battery cell, or a battery cell of other shapes. The prismatic battery cell may be a square-shell battery cell, a blade-shaped battery cell, a multi-prism battery, where the multi-prism battery may be, for example, a hexagonal prism battery, which is not particularly limited in the present application. In some embodiments, the battery 120 is a low-voltage battery. For example, the battery 120 is a storage battery, where the battery 120 provides low-voltage current to the low-voltage power distribution module 130, and the low-voltage power distribution module 130 distributes the low-voltage current to the corresponding electric appliance 200. The battery 120 may be fixed within the box 110 through a fixing structure, where the fixing structure may be, but is not limited to, a fastening structure, a snap-fit structure, and an adhesive structure.

The low-voltage power distribution module 130 is a component configured to distribute the electrical energy provided by the battery 120 to various electric appliances 200. The low-voltage power distribution module 130 includes a first circuit board 131 and multiple first electronic elements 132. Multiple first electrical wires (not shown in the figures) are provided on the first circuit board 131, and the multiple first electronic elements 132 are electrically connected through corresponding first electrical wires to form a low-voltage distribution circuit of the low-voltage power distribution module 130. The first electronic elements 132 may be, but are not limited to, control chips, capacitors, resistors, inductors, and transistors. The low-voltage distribution circuit is electrically connected to the battery 120, and the low-voltage distribution circuit may also be configured to be electrically connected to the corresponding electric appliance 200. The electrical energy provided by the battery 120 can be delivered to the corresponding electric appliance 200 along the corresponding low-voltage distribution circuit. Certainly, in other embodiments, under a condition that the vehicle 1000 is a new energy vehicle, the vehicle 1000 further includes a traction battery, the traction battery is electrically connected to the low-voltage power distribution module 130 through a direct-current converter, a high-voltage current outputted by the traction battery is converted into a low-voltage current through the direct-current converter, the low-voltage current is delivered to the low-voltage power distribution module 130, and the low-voltage power distribution module 130 distributes the low-voltage current to the corresponding electric appliance 200. The low-voltage power distribution module 130 may be fixed within the box 110 through a fixing structure, where the fixing structure may be, but is not limited to, a fastening structure, a snap-fit structure, and an adhesive structure.

The thermal management module 140 is a component configured to drive and control operation of thermal management actuators such as a water pump, a flow valve, a fan motor, and an air conditioning compressor. The thermal management module 140 includes a second circuit board 141 and multiple second electronic elements 142. The second circuit board 141 is provided with second electrical wires (not shown in the figures), and the multiple second electronic elements 142 are electrically connected through the second electrical wires to form a thermal management circuit of the thermal management module 140. The thermal management circuit is configured to be electrically connected to the thermal management actuator to drive and control the thermal management actuator. The second electronic elements 142 may be, but are not limited to, control chips, capacitors, resistors, inductors, and transistors. The thermal management module 140 may be fixed within the box 110 through a fixing structure, where the fixing structure may be, but is not limited to, a fastening structure, a snap-fit structure, and an adhesive structure.

In some embodiments, under a condition that the vehicle 1000 is a new energy vehicle, the vehicle 1000 includes a traction battery, the traction battery includes a liquid cooling apparatus, a thermal management actuator in the liquid cooling apparatus is a water pump, and the thermal management circuit is electrically connected to the water pump to control operation of the water pump, so as to control a flow rate of a cooling liquid in the liquid cooling apparatus, thereby regulating a temperature of the traction battery.

In some other embodiments, the vehicle 1000 includes an engine and a cooling fan, the cooling fan is configured to dissipate heat from the engine, a thermal management actuator in the cooling fan is a motor, and the thermal management circuit is electrically connected to the motor to control operation of the motor, so as to control a rotation speed of the cooling fan, thereby regulating a temperature of the engine.

In still some other embodiments, the vehicle 1000 includes a liquid cooling system, a thermal management actuator in the liquid cooling system is a flow valve, the flow valve is disposed in a cooling pipeline in the liquid cooling system, and the thermal management circuit is electrically connected to the flow valve to change a flow rate of a cooling liquid in the cooling pipeline by changing an opening degree of the flow valve, thereby regulating temperatures of components such as the engine and the traction battery.

In yet some other embodiments, the vehicle 1000 includes an air conditioner, a thermal management actuator in the air conditioner is a compressor, and the thermal management circuit is electrically connected to the compressor to control operation of the compressor, thereby regulating a cooling capacity or a heating capacity of the air conditioner.

In some embodiments, the thermal management module 140 may also be electrically connected to the low-voltage power distribution module 130, and part of the electrical energy provided by the battery 120 is delivered to the thermal management module 140 through the low-voltage power distribution module 130, so as to supply power to the thermal management module 140.

In the control apparatus 100 provided in this embodiment of the present application, the battery 120, the low-voltage power distribution module 130, and the thermal management module 140 are accommodated in the box 110, so that the battery 120, the low-voltage power distribution module 130, and the thermal management module 140 are integrated into an integral body. As compared to a manner in which the battery 120, the low-voltage power distribution module 130, and the thermal management module 140 are dispersedly arranged, there is no need to separately allocate assembly space for the battery 120, the low-voltage power distribution module 130, and the thermal management module 140, effectively saving the assembly space in the control apparatus 100. In addition, there is no need to separately configure housings for the battery 120, the low-voltage power distribution module 130, and the thermal management module 140, effectively reducing the volume of the control apparatus 100, and making the overall structure of the control apparatus 100 more compact, thereby effectively increasing the space utilization rate of an electric device using the above control apparatus 100.

In some embodiments of the present application, referring to FIG. 3, the control apparatus 100 further includes a cooling module 150, the cooling module 150 is disposed between the low-voltage power distribution module 130 and the thermal management module 140, and the low-voltage power distribution module 130 and the thermal management module 140 are in thermal-conduction connection with the cooling module 150.

The cooling module 150 is a component configured to absorb heat generated by operation of the low-voltage power distribution module 130 and the thermal management module 140. The low-voltage power distribution module 130 and the thermal management module 140 being in thermal-conduction connection with the cooling module 150 means: the low-voltage power distribution module 130 and the thermal management module 140 are in contact with the cooling module 150, and heat generated by operation of the low-voltage power distribution module 130 can be transferred to the cooling module 150 through a contact portion between the low-voltage power distribution module 130 and the cooling module 150. Similarly, heat generated by operation of the thermal management module 140 can be transferred to the cooling module 150 through a contact portion between the thermal management module 140 and the cooling module 150. Certainly, in other embodiments, the cooling module 150 may also be in thermal-conduction connection with another component of the control apparatus 100 to cool this component. For example, the cooling module 150 may also be in thermal-conduction connection with the battery 120. The cooling module 150 may be, but is not limited to, a liquid cooling module, an air cooling module, and a metal heat conduction module. The cooling module 150 may be fixed within the box 110 through a fixing structure, where the fixing structure may be, but is not limited to, a fastening structure, a snap-fit structure, and an adhesive structure.

By adopting the above technical solution, the low-voltage power distribution module 130 and the thermal management module 140 can share one cooling module 150, effectively reducing the number of the cooling modules 150, further reducing the volume of the control apparatus 100, thereby further increasing the space utilization rate of the vehicle 1000 using the above control apparatus 100.

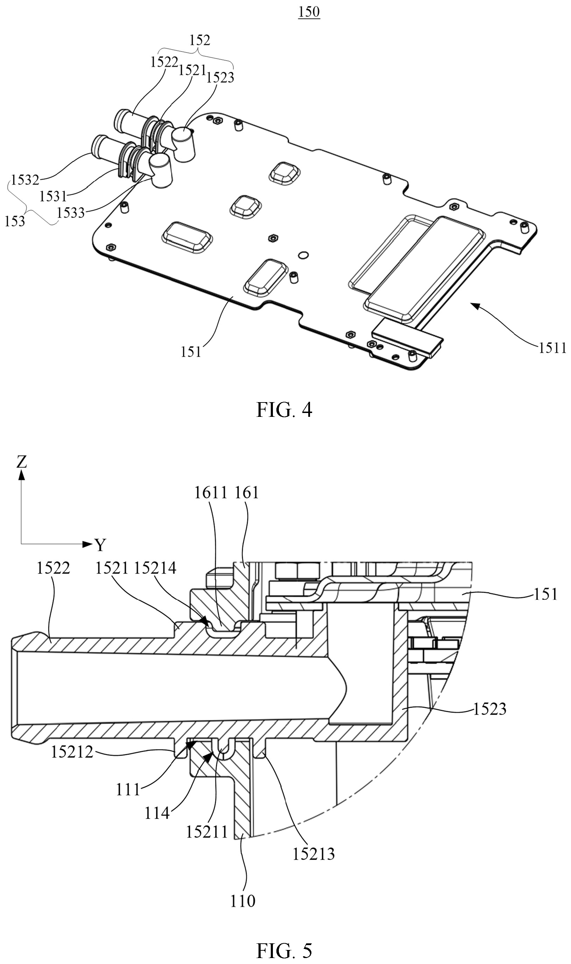

In some embodiments of the present application, referring to FIG. 4, the cooling module 150 includes a liquid cooling plate 151, a liquid inlet joint 152, and a liquid outlet joint 153. A cooling flow channel (not shown in the figures) is provided inside the liquid cooling plate 151, the low-voltage power distribution module 130 and the thermal management module 140 are in thermal-conduction connection with the liquid cooling plate 151, the liquid inlet joint 152 is connected to a liquid inlet end of the cooling flow channel, and the liquid outlet joint 153 is connected to a liquid outlet end of the cooling flow channel.

In other words, in these embodiments, the cooling module 150 is a liquid cooling module.

The liquid cooling plate 151 is a main component of the cooling module 150, and a material of the liquid cooling plate 151 may be, but is not limited to, aluminum, aluminum alloy, copper, iron, and stainless steel. The cooling flow channel of the liquid cooling plate 151 is configured to provide flow space for a cooling medium, where the cooling medium may be, but is not limited to, cooling water and cooling oil.

The liquid inlet joint 152 is a component configured to be connected to an external liquid supply pipeline and input the cooling medium into the cooling flow channel. The liquid inlet joint 152 and the liquid cooling plate 151 may be an integrally formed member, that is, the liquid inlet joint 152 and the liquid cooling plate 151 are integrally formed. The liquid inlet joint 152 and the liquid cooling plate 151 may alternatively be separately connected, for example, the liquid inlet joint 152 and the liquid cooling plate 151 may be welded into an integral body.

The liquid outlet joint 153 is a component configured to be connected to an external liquid discharge pipeline and output the cooling medium to the outside of the cooling flow channel. The liquid outlet joint 153 and the liquid cooling plate 151 may be an integrally formed member, that is, the liquid outlet joint 153 and the liquid cooling plate 151 are integrally formed. The liquid outlet joint 153 and the liquid cooling plate 151 may alternatively be separately connected, for example, the liquid outlet joint 153 and the liquid cooling plate 151may be welded into an integral body.

By adopting the above technical solution, the efficiency of the cooling module 150 in cooling the low-voltage power distribution module 130 and the thermal management module 140 is effectively improved, thereby effectively improving the reliability of the control apparatus 100.

In some embodiments of the present application, referring to FIG. 3 to FIG. 5, a sidewall of the box 110 is provided with a first socket 111, an inner edge of the first socket 111 is provided with a first sealing groove 114, the liquid inlet joint 152 includes a first sealing portion 1521 disposed in the first socket 111, a first rib 15211 protrudes from a peripheral side of the first sealing portion 1521, and the first rib 15211 is inserted into the first sealing groove 114.

The first socket 111 is a portion configured to provide an installation space for the liquid inlet joint 152. The shape of the first socket 111 may be, but is not limited to, a circular shape, a semicircular shape, a square shape, a trapezoidal shape, and a triangular shape. The inner edge of the first socket 111 refers to a portion that encloses and forms the internal space of the first socket 111.

The first sealing portion 1521 is a portion configured to seal the first socket 111. A peripheral contour of the first sealing portion 1521 matches the first socket 111 in shape. For example, under a condition that the first socket 111 is semicircular, the peripheral contour of the first sealing portion 1521 is also semicircular. In some embodiments, the liquid inlet joint 152 may further include a first connection portion 1522 and a second connection portion 1523, the first sealing portion 1521 is connected between the first connection portion 1522 and the second connection portion 1523, the first connection portion 1522 is connected to an external liquid supply pipeline, and the second connection portion 1523 is connected to the liquid cooling plate 151.

In some embodiments, the first socket 111 is recessed at the open end of the box 110. In other words, the first socket 111 runs through the open end of the box 110 to form a first notch, that is, the first socket 111 can achieve communication between the internal environment and the external environment of the box 110 along a thickness direction of the sidewall of the box 110 (such as a direction Y shown in FIG. 5), and the first socket 111 can also communicate with the external environment of the box 110 through the first notch. The first sealing groove 114 is recessed at the inner edge of the first socket 111, the first sealing groove 114 extends along a length direction of the inner edge of the first socket 111, and the first sealing groove 114 runs through two ends of the inner edge of the first socket 111. The first sealing portion 1521 can enter the first socket 111 through the first notch, and simultaneously the first rib 15211 enters the first sealing groove 114 until the first sealing portion 1521 is completely snapped into the first socket 111. Under this condition, the first rib 15211 cooperates with the first sealing groove 114 to seal a gap between the peripheral side of the first sealing portion 1521 and the inner edge of the first socket 111.

In some other embodiments, the first socket 111 runs through the sidewall of the box 110 but does not run through the open end of the box 110. In other words, the first socket 111 can achieve communication between the internal environment and the external environment of the box 110 only along a thickness direction of the sidewall of the box 110. The first sealing groove 114 is recessed at the inner edge of the first socket 111, and the first sealing groove 114 extends along the length direction of the inner edge of the first socket 111 to form a closed loop structure. The first rib 15211 has a closed loop structure surrounding a central axis of the liquid inlet joint 152, and an outer diameter of the first rib 15211 is larger than a diameter of the inner edge of the first socket 111. In this way, while the first sealing portion 1521 is passing through the first socket 111, the first rib 15211 is squeezed by the inner edge of the first socket 111 until the first rib 15211 enters the first sealing groove 114. Under this condition, the first rib 15211 cooperates with the first sealing groove 114 to seal the gap between the peripheral side of the first sealing portion 1521 and the inner edge of the first socket 111. In these embodiments, to help the first rib 15211 to enter the first sealing groove 114, the first rib 15211 may be made of a flexible material, where the flexible material may be, but is not limited to, rubber and silicone. Certainly, in other embodiments, the first sealing portion 1521 and the first rib 15211 may be integrally formed using a flexible material.

In some embodiments, to further improve the sealing performance of the control apparatus 100, the first sealing groove 114 may be filled with a sealant.

By adopting the above technical solution, the liquid inlet joint 152 can pass through the first socket 111 and seal the first socket 111, effectively improving the sealing performance of the control apparatus 100. In addition, there is no need to additionally provide a sealing member to seal the first socket 111, effectively simplifying the sealing structure of the control apparatus 100 and the assembly process of the control apparatus 100.

In some embodiments of the present application, referring to FIG. 5, a second rib 15212 and a third rib 15213 protrude from the peripheral side of the first sealing portion 1521. The second rib 15212, the first rib 15211, and the third rib 15213 are spaced apart along a length direction of the liquid inlet joint 152 (such as the direction Y shown in FIG. 5), the second rib 15212 abuts against an outer wall of the box 110, and the third rib 15213 abuts against an inner wall of the box 110.

It can be understood that, under a condition that the first sealing portion 1521 is completely snapped into the first socket 111, the second rib 15212 abuts against the outer wall of the box 110, and the third rib 15213 abuts against the inner wall of the box 110. In other words, an outer diameter of the second rib 15212 is larger than an aperture of the first socket 111, an outer diameter of the third rib 15213 is larger than the aperture of the first socket 111, and a spacing between the second rib 15212 and the third rib 15213 along the length direction of the liquid inlet joint 152 is equal to a thickness of the sidewall of the box 110. Certainly, in consideration of assembly errors, there may also be a tiny gap between the second rib 15212 and the outer wall of the box 110. Similarly, there may also be a tiny gap between the third rib 15213 and the inner wall of the box 110.

In these embodiments, the first socket 111 runs through the open end of the box 110 to form a first notch, the first sealing groove 114 is recessed at the inner edge of the first socket 111, the first sealing groove 114 extends along the length direction of the inner edge of the first socket 111, and the first sealing groove 114 runs through two ends of the inner edge of the first socket 111. The first sealing portion 1521 can enter the first socket 111 through the first notch, simultaneously the first rib 15211 enters the first sealing groove 114, the second rib 15212 abuts against the outer wall of the box 110, and the third rib 15213 abuts against the inner wall of the box 110 until the first sealing portion 1521 is completely snapped into the first socket 111. Under this condition, the first rib 15211 cooperates with the first sealing groove 114 to seal the gap between the peripheral side of the first sealing portion 1521 and the inner edge of the first socket 111, the second rib 15212 seals a gap between the peripheral side of the first sealing portion 1521 and one end edge of the first socket 111, and the third rib 15213 seals a gap between the peripheral side of the first sealing portion 1521 and the other end edge of the first socket 111.

By adopting the above technical solution, the sealing performance of the control apparatus 100 is further improved.

In some embodiments of the present application, referring to both FIG. 3 and FIG. 4, a sidewall of the box 110 is provided with a second socket 112, an inner edge of the second socket 112 is provided with a second sealing groove (not shown in the figures, which may refer to the structure of the first sealing groove 114 shown in FIG. 5), the liquid outlet joint 153 includes a second sealing portion 1531 disposed in the second socket 112, a fourth rib (not shown in the figures, which may refer to the structure of the first rib 15211 shown in FIG. 5) protrudes from a peripheral side of the second sealing portion 1531, and the fourth rib is inserted into the second sealing groove.

The second socket 112 is a portion configured to provide an installation space for the liquid outlet joint 153. The shape of the second socket 112 may be, but is not limited to, a circular shape, a semicircular shape, a square shape, a trapezoidal shape, and a triangular shape. The inner edge of the second socket 112 refers to a portion that encloses and forms the internal space of the second socket 112.

The second sealing portion 1531 is a portion configured to seal the second socket 112. A peripheral contour of the second sealing portion 1531 matches the second socket 112 in shape. For example, under a condition that the second socket 112 is semicircular, the peripheral contour of the second sealing portion 1531 is also semicircular. In some embodiments, the liquid outlet joint 153 may further include a third connection portion 1532 and a fourth connection portion 1533, the second sealing portion 1531 is connected between the third connection portion 1532 and the fourth connection portion 1533, the third connection portion 1532 is connected to an external liquid discharge pipeline, and the fourth connection portion 1533 is connected to the liquid cooling plate 151.

In some embodiments, the second socket 112 is recessed at the open end of the box 110. In other words, the second socket 112 runs through the open end of the box 110 to form a second notch, that is, the second socket 112 can achieve communication between the internal environment and the external environment of the box 110 along the thickness direction of the sidewall of the box 110, and the second socket 112 can also communicate with the external environment of the box 110 through the second notch. The second sealing groove is recessed at the inner edge of the second socket 112, the second sealing groove extends along a length direction of the inner edge of the second socket 112, and the second sealing groove runs through two ends of the inner edge of the second socket 112. The second sealing portion 1531 can enter the second socket 112 through the second notch, and simultaneously the fourth rib enters the second sealing groove until the second sealing portion 1531 is completely snapped into the second socket 112. Under this condition, the fourth rib cooperates with the second sealing groove to seal a gap between the peripheral side of the second sealing portion 1531 and the inner edge of the second socket 112.

In some other embodiments, the second socket 112 runs through the sidewall of the box 110 but does not run through the open end of the box 110. In other words, the second socket 112 can achieve communication between the internal environment and the external environment of the box 110 only along the thickness direction of the sidewall of the box 110. The second sealing groove is recessed at the inner edge of the second socket 112, and the second sealing groove extends along the length direction of the inner edge of the second socket 112 to form a closed loop structure. The fourth rib has a closed loop structure surrounding a central axis of the liquid outlet joint 153, and an outer diameter of the fourth rib is larger than a diameter of the inner edge of the second socket 112. In this way, while the second sealing portion 1531 is passing through the second socket 112, the fourth rib is squeezed by the inner edge of the second socket 112 until the fourth rib enters the second sealing groove. Under this condition, the fourth rib cooperates with the second sealing groove to seal the gap between the peripheral side of the second sealing portion 1531 and the inner edge of the second socket 112. In these embodiments, to help the fourth rib to enter the second sealing groove, the fourth rib may be made of a flexible material, where the flexible material may be, but is not limited to, rubber and silicone. Certainly, in other embodiments, the second sealing portion 1531 and the fourth rib may be integrally formed using a flexible material.

In some embodiments, to further improve the sealing performance of the control apparatus 100, the second sealing groove may be filled with a sealant.

By adopting the above technical solution, the liquid outlet joint 153 can pass through the second socket 112 and seal the second socket 112, effectively improving the sealing performance of the control apparatus 100. In addition, there is no need to additionally provide a sealing member to seal the second socket 112, effectively simplifying the sealing structure of the control apparatus 100 and the assembly process of the control apparatus 100.

In some embodiments of the present application, a fifth rib (not shown in the figures, which may refer to the structure of the second rib 15212 shown in FIG. 5) and a sixth rib (not shown in the figures, which may refer to the structure of the third rib 15213 shown in FIG. 5) protrude from the peripheral side of the second sealing portion 1531. The fifth rib, the fourth rib, and the sixth rib are spaced apart along a length direction of the liquid outlet joint 153 (such as the direction Y shown in FIG. 5), the fifth rib abuts against the outer wall of the box 110, and the sixth rib abuts against the inner wall of the box 110.

It can be understood that, under a condition that the second sealing portion 1531 is completely snapped into the second socket 112, the fifth rib abuts against the outer wall of the box 110, and the sixth rib abuts against the inner wall of the box 110. In other words, an outer diameter of the fifth rib is larger than an aperture of the second socket 112, an outer diameter of the sixth rib is larger than the aperture of the second socket 112, and a spacing between the fifth rib and the sixth rib along the length direction of the liquid outlet joint 153 is equal to the thickness of the sidewall of the box 110. Certainly, in consideration of assembly errors, there may also be a tiny gap between the fifth rib and the outer wall of the box 110. Similarly, there may also be a tiny gap between the sixth rib and the inner wall of the box 110.

In these embodiments, the second socket 112 runs through the open end of the box 110 to form a second notch, the second sealing groove is recessed at the inner edge of the second socket 112, the second sealing groove extends along the length direction of the inner edge of the second socket 112, and the second sealing groove runs through two ends of the inner edge of the second socket 112. The second sealing portion 1531 can enter the second socket 112 through the second notch, simultaneously the fourth rib enters the second sealing groove, the fifth rib abuts against the outer wall of the box 110, and the sixth rib abuts against the inner wall of the box 110 until the second sealing portion 1531 is completely snapped into the second socket 112. Under this condition, the fourth rib cooperates with the second sealing groove to seal the gap between the peripheral side of the second sealing portion 1531 and the inner edge of the second socket 112, the fifth rib seals a gap between the peripheral side of the second sealing portion 1531 and one end edge of the second socket 112, and the sixth rib seals a gap between the peripheral side of the second sealing portion 1531 and the other end edge of the second socket 112.

By adopting the above technical solution, the sealing performance of the control apparatus 100 is further improved.

In some embodiments of the present application, referring to FIG. 5, an annular rib 1611 protrudes from a side of the box cover 160 facing the box 110, a third sealing groove (not shown in the figures) extending along a circumferential direction of the open end is provided at the open end of the box 110, and the annular rib 1611 is inserted into the third sealing groove.

The annular rib 1611 protrudes from a side of the box cover 160 facing the box 110 along a direction in which the box cover 160 covers the box 110 (such as a direction opposite to a direction Z shown in FIG. 5). Correspondingly, the third sealing groove is recessed at an edge of the open end of the box 110 along the direction in which the box cover 160 covers the box 110. Under a condition that the box cover 160 covers the open end of the box 110, the annular rib 1611 is inserted into the third sealing groove.

By adopting the above technical solution, a gap between the box cover 160 and the box 110 is effectively sealed, thereby effectively improving the sealing performance of the control apparatus 100.

In some embodiments of the present application, referring to FIG. 3 to FIG. 5, the open end is provided with a first socket 111 and a second socket 112, the liquid inlet joint 152 includes a first sealing portion 1521 disposed in the first socket 111, the first sealing portion 1521 is provided with a fourth sealing groove 15214, the liquid outlet joint 153 includes a second sealing portion 1531 disposed in the second socket 112, the second sealing portion 1531 is provided with a fifth sealing groove (not shown in the figures, which may refer to the structure of the fourth sealing groove 15214 shown in FIG. 5), and the third sealing groove, the fourth sealing groove 15214, the fifth sealing groove are in communication to form an annular groove, and the annular rib 1611 is inserted into the annular groove.

In these embodiments, the first socket 111 runs through the open end of the box 110 to form a first notch, the second socket 112 runs through the open end of the box 110 to form a second notch, the fourth sealing groove 15214 is recessed on a side of the first sealing portion 1521 facing the first notch, and the fifth sealing groove is recessed on a side of the second sealing portion 1531 facing the second notch. Under a condition that the first sealing portion 1521 is disposed in the first socket 111 and the second sealing portion 1531 is disposed in the second socket 112, the third sealing groove, the fourth sealing groove 15214, and the fifth sealing groove are in communication to form an annular groove, where the shape of the annular groove matches the shape of the annular rib 1611. For example, under a condition that the annular rib 1611 is in a square annular shape, the annular groove is also in a square annular shape. Under a condition that the box cover 160 covers the open end of the box 110, the annular rib 1611 is inserted into the annular groove.

By adopting the above technical solution, the gap between the box cover 160 and the box 110 can be sealed, and the first socket 111 and the second socket 112 can also be sealed, effectively improving the sealing performance of the control apparatus 100. In addition, there is no need to additionally provide sealing members to seal the first socket 111 and the second socket 112, effectively simplifying the sealing structure of the control apparatus 100 and the assembly process of the control apparatus 100.

In some embodiments of the present application, referring to FIG. 4, FIG. 6, and FIG. 7, the liquid cooling plate 151 is provided with an avoidance opening 1511, the low-voltage power distribution module 130 has a first wiring terminal 133, the thermal management module 140 has a second wiring terminal 143, and the first wiring terminal 133 and/or the second wiring terminal 143 passes through the avoidance opening 1511.

The first wiring terminal 133 is a portion configured to be electrically connected to the electric appliance 200. There may be multiple first wiring terminals 133, specifically depending on actual application needs.

The second wiring terminal 143 is a portion configured to be electrically connected to the thermal management actuator. There may be multiple second wiring terminals 143, specifically depending on actual application needs.

The avoidance opening 1511 is a portion configured to avoid the first wiring terminal 133 and/or the second wiring terminal 143. There may be one or more avoidance openings 1511, specifically depending on the number of the first wiring terminals 133 and/or the second wiring terminals 143. A position of the avoidance opening 1511 depends on a position of the first wiring terminal 133 and/or the second wiring terminal 143. For example, the avoidance opening 1511 may be provided at one side of the liquid cooling plate 151. For another example, the avoidance opening 1511 may be provided at a middle portion of the liquid cooling plate 151.

In some embodiments, the box cover 160 is provided with a wiring opening, the low-voltage power distribution module 130 is disposed on a side of the liquid cooling plate 151 facing the box cover 160, the thermal management module 140 is disposed on a side of the liquid cooling plate 151 facing away from the box cover 160, and the second wiring terminal 143 passes through the avoidance opening 1511 and is located in the wiring opening.

In some other embodiments, the box cover 160 is provided with a wiring opening, the thermal management module 140 is disposed on a side of the liquid cooling plate 151 facing the box cover 160, the low-voltage power distribution module 130 is disposed on a side of the liquid cooling plate 151 facing away from the box cover 160, and the first wiring terminal 133 passes through the avoidance opening 1511 and is located in the wiring opening.

In still some other embodiments, the box cover 160 is provided with multiple wiring openings, the liquid cooling plate 151 is provided with multiple avoidance openings 1511, the low-voltage power distribution module 130 and the thermal management module 140 are disposed on a side of the liquid cooling plate 151 facing away from the box cover 160, and the first wiring terminal 133 and the second wiring terminal 143 pass through corresponding avoidance openings 1511 and are located in corresponding wiring openings.

By adopting the above technical solution, the first wiring terminal 133 and/or the second wiring terminal 143 can pass through the avoidance opening 1511. This facilitates connection of the first wiring terminal 133 and/or the second wiring terminal 143 to an external cable, without needing to avoid the first wiring terminal 133 and/or the second wiring terminal 143 by staggering the low-voltage power distribution module 130 and/or the thermal management module 140 with the liquid cooling plate 151, making the overall structure of the control apparatus 100 more compact, thereby further increasing the space utilization rate of the vehicle 1000 using the above control apparatus 100.

In some embodiments of the present application, the low-voltage power distribution module 130, the cooling module 150, and the thermal management module 140 are connected into an integral body.

The low-voltage power distribution module 130, the cooling module 150, and the thermal management module 140 may be connected in a manner which includes but is not limited to fastening, adhesion, welding, and snap-fit connection.

In some embodiments, referring to FIG. 3, a connection seat 115 is provided at the open end of the box 110, there may be multiple connection seats 115, and the multiple connection seats 115 are spaced apart along a circumferential direction of the open end of the box 110. The low-voltage power distribution module 130 and the thermal management module 140 are connected to the cooling module 150 through fasteners, for example, the low-voltage power distribution module 130 is connected to a side of the cooling module 150 facing the box cover 160 through a fastener, the thermal management module 140 is connected to a side of the cooling module 150 facing away from the box cover 160 through a fastener, and the cooling module 150 is connected to the connection seat 115 through a fastener.

By adopting the above technical solution, the low-voltage power distribution module 130, the cooling module 150, and the thermal management module 140 may first be connected into an integral body, and then the integral body is assembled into the box 110, thereby effectively improving the assembly efficiency of the control apparatus 100.

In some embodiments of the present application, referring to FIG. 2, the box cover 160 includes a cover body 161 covering the open end of the box 110, and the cover body 161 is a metal member.

The cover body 161 is a main component of the box cover 160, and the cover body 161 covers the open end of the box 110 to isolate the internal environment of the box 110 from the external environment of the box 110. The cover body 161 is a metal member. In other words, the cover body 161 is made of a metal material, where the metal material may be, but is not limited to, aluminum, aluminum alloy, copper, iron, and stainless steel. The cover body 161 may be an integrally formed member, that is, the cover body 161 may be integrally formed using a die-casting forming process or a cast-molding process.

By adopting the above technical solution, heat inside the box 110 can be quickly conducted outward through the cover body 161, thereby effectively improving the heat dissipation performance of the control apparatus 100.

In some embodiments of the present application, the low-voltage power distribution module 130 and/or the thermal management module 140 is in thermal-conduction connection with the cover body 161.

It should be noted that the low-voltage power distribution module 130 and/or the thermal management module 140 being in thermal-conduction connection with the cover body 161 means: a heat-generating portion of the low-voltage power distribution module 130 and/or a heat-generating portion of the thermal management module 140 is in contact with the cover body 161, so that heat generated by the heat-generating portion of the low-voltage power distribution module 130 and/or heat generated by the heat-generating portion of the thermal management module 140 is transferred to the cover body 161, thereby cooling the low-voltage power distribution module 130 and/or the thermal management module 140.

In some embodiments, a top surface of the low-voltage power distribution module 130 faces a bottom surface of the cover body 161, and the low-voltage power distribution module 130 is in thermal-conduction connection with the cover body 161, where the top surface of the low-voltage power distribution module 130 refers to a surface of the low-voltage power distribution module 130 facing away from the bottom of the box 110, and the bottom surface of the cover body 161 refers to a surface of the cover body 161 facing the bottom of the box 110.

In some other embodiments, a top surface of the thermal management module 140 faces the bottom surface of the cover body 161, and the thermal management module 140 is in thermal-conduction connection with the cover body 161, where the top surface of the thermal management module 140 refers to a surface of the thermal management module 140 facing away from the bottom of the box 110.

In still some other embodiments, the top surface of the low-voltage power distribution module 130 and the top surface of the thermal management module 140 face the bottom surface of the cover body 161, and the low-voltage power distribution module 130 and the thermal management module 140 are in thermal-conduction connection with the cover body 161.

By adopting the above technical solution, heat generated by operation of the low-voltage power distribution module 130 and/or the thermal management module 140 can be quickly conducted outward through the cover body 161, thereby effectively improving the efficiency in cooling the low-voltage power distribution module 130 and/or the thermal management module 140. In addition, there is no need to additionally provide cooling components, effectively reducing the number of components of the control apparatus 100, effectively reducing the production costs of the control apparatus 100, and also further reducing the volume of the control apparatus 100, thereby further increasing the space utilization rate of the vehicle 1000 using the above control apparatus 100.

In some embodiments of the present application, a heat conduction portion (not shown in the figures) protrudes from a surface of the cover body 161 facing the box 110, and the low-voltage power distribution module 130 and/or the thermal management module 140 is in thermal-conduction connection with the heat conduction portion.

The heat conduction portion is a portion configured to be in contact with the heat-generating portion of the low-voltage power distribution module 130 and/or the heat-generating portion of the thermal management module 140. There may be one or more heat conduction portions, specifically depending on the number of the heat-generating portions of the low-voltage power distribution module 130 and/or the heat-generating portions of the thermal management module 140. The heat conduction portion may be, but is not limited to, a protruding boss structure, a protruding column structure, and a protruding point structure. The heat conduction portion has a contact surface configured to be in contact with the heat-generating portion of the low-voltage power distribution module 130 and/or the heat-generating portion of the thermal management module 140, and the shape of the contact surface depends on the shape of the heat-generating portion of the low-voltage power distribution module 130 and/or the shape of the heat-generating portion of the thermal management module 140. For example, when the heat-generating portion of the low-voltage power distribution module 130 is circular, the contact surface is also circular.

In some embodiments, the top surface of the low-voltage power distribution module 130 faces the bottom surface of the cover body 161, and the heat-generating portion of the low-voltage power distribution module 130 is in thermal-conduction connection with the heat conduction portion.

In some other embodiments, the top surface of the thermal management module 140 faces the bottom surface of the cover body 161, and the heat-generating portion of the thermal management module 140 is in thermal-conduction connection with the heat conduction portion.

In still some other embodiments, the top surface of the low-voltage power distribution module 130 and the top surface of the thermal management module 140 face the bottom surface of the cover body 161, there are multiple heat conduction portions, and the heat-generating portion of the low-voltage power distribution module 130 and the heat-generating portion of the thermal management module 140 are in thermal-conduction connection with corresponding heat conduction portions.

By adopting the above technical solution, the cover body 161 may be in full contact with the low-voltage power distribution module 130 and/or the thermal management module 140, thereby further improving the efficiency in cooling the low-voltage power distribution module 130 and/or the thermal management module 140.

In some embodiments of the present application, referring to FIG. 2, FIG. 6, and FIG. 7, the cover body 161 is provided with a wiring opening, the box cover 160 further includes an insulating member 162 disposed in the wiring opening, a wiring channel 1621 is provided inside the insulating member 162, and the first wiring terminal 133 and/or the second wiring terminal 143 passes through the wiring channel 1621.

The insulating member 162 is a component configured to insulate and separate the first wiring terminal 133 and/or the second wiring terminal 143 from the cover body 161. It can be understood that the insulating member 162 is made of an insulating material, where the insulating material may be, but is not limited to, polypropylene, polyethylene, polyvinyl chloride, and rubber. The insulating member 162 covers an inner wall of the wiring opening, and the wiring channel 1621 of the insulating member 162 runs through the bottom surface and top surface of the cover body 161. In other words, under a condition that the cover body 161 covers the open end of the box 110, the wiring channel 1621 of the insulating member 162 achieves communication between the internal environment and the external environment of the control apparatus 100.

In some embodiments, the top surface of the low-voltage power distribution module 130 faces the bottom surface of the cover body 161, the first wiring terminal 133 is disposed on the top surface of the low-voltage power distribution module 130, and the first wiring terminal 133 passes through the wiring channel 1621.

In some other embodiments, the top surface of the thermal management module 140 faces the bottom surface of the cover body 161, the second wiring terminal 143 is disposed on the top surface of the thermal management module 140, and the second wiring terminal 143 passes through the wiring channel 1621.

In still some other embodiments, the top surface of the low-voltage power distribution module 130 and the top surface of the thermal management module 140 are disposed opposite the bottom surface of the cover body 161, the cover body 161 is provided with multiple wiring openings, there are multiple insulating members 162, and the multiple insulating members 162 are in one-to-one correspondence with the multiple wiring openings. The first wiring terminal 133 is disposed on the top surface of the low-voltage power distribution module 130, the second wiring terminal 143 is disposed on the top surface of the thermal management module 140, and the first wiring terminal 133 and the second wiring terminal 143 pass through corresponding wiring channels 1621.

By adopting the above technical solution, the first wiring terminal 133 and/or the second wiring terminal 143 is effectively insulated and separated from the cover body 161, thereby effectively improving the reliability of the control apparatus 100.

In some embodiments of the present application, the insulating member 162 is injection molded in the wiring opening.

In a production process of the box cover 160, the cover body 161 may first be made using a casting process, where the casting process may be, but is not limited to, a cast-molding process, and a die-casting process. Then, an injection molding process is used to form the insulating member 162 in the corresponding wiring opening.

By adopting the above technical solution, production procedures of the box cover 160 are effectively simplified, thereby effectively improving the production efficiency of the control apparatus 100.

Certainly, in other embodiments, an injection molding process may also be used to form the insulating member 162 on the first wiring terminal 133 and/or the second wiring terminal 143.

In some embodiments of the present application, referring to FIG. 3, the low-voltage power distribution module 130, the thermal management module 140, and the battery 120 are stacked along a depth direction of the box 110 (such as a direction opposite to the direction Z shown in FIG. 3).

In some embodiments, in the depth direction of the box 110, the low-voltage power distribution module 130, the thermal management module 140, and the battery 120 are sequentially stacked.

In some other embodiments, in the depth direction of the box 110, the thermal management module 140, the low-voltage power distribution module 130, and the battery 120 are sequentially stacked.

In still some other embodiments, under a condition that the control apparatus 100 further includes a cooling module 150, in the depth direction of the box 110, the low-voltage power distribution module 130, the cooling module 150, the thermal management module 140, and the battery 120 are sequentially stacked. In these embodiments, during an assembly operation of the control apparatus 100, the battery 120 is assembled to the bottom of the box 110, the low-voltage power distribution module 130, the cooling module 150, and the thermal management module 140 are connected into an integral body, and then the integral body is assembled into the box 110.

By adopting the above technical solution, the low-voltage power distribution module 130, the thermal management module 140, and the battery 120 can more fully utilize the internal space of the box 110, making the overall structure of the control apparatus 100 more compact, thereby further increasing the space utilization rate of the vehicle 1000 using the above control apparatus 100.

In some embodiments of the present application, the control apparatus 100 further includes a first heat insulation member (not shown in the figures, which may refer to the structure of a second heat insulation member 170 shown in FIG. 3), where the first heat insulation member is disposed between the low-voltage power distribution module 130 and the battery 120.

The first heat insulation member is a component configured to block a heat transfer path between the low-voltage power distribution module 130 and the battery 120. It can be understood that the first heat insulation member is made of a heat insulation material, where the heat insulation material may be, but is not limited to glass fiber, asbestos, rock wool, and silicate. In these embodiments, the low-voltage power distribution module 130 and the battery 120 may be disposed opposite each other. For example, along the depth direction of the box 110, the thermal management module 140, the low-voltage power distribution module 130, the first heat insulation member, and the battery 120 are sequentially stacked.

In some embodiments, the first heat insulation member is a plate-like structure, where a plate surface of the first heat insulation member is a first reference surface, and a projection of the battery 120 along a direction perpendicular to the plate surface of the first heat insulation member is located within the first reference surface. In other words, the first heat insulation member can cover the entire battery 120.

By adopting the above technical solution, heat generated by operation of the low-voltage power distribution module 130 is effectively prevented from being transferred to the battery 120, effectively reducing the risk of thermal runaway of the battery 120, thereby effectively improving the reliability of the control apparatus 100.

In some embodiments of the present application, referring to FIG. 3, the control apparatus 100 further includes a second heat insulation member 170, where the second heat insulation member 170 is disposed between the thermal management module 140 and the battery 120.

The second heat insulation member 170 is a component configured to block the heat transfer path between the thermal management module 140 and the battery 120. It can be understood that the second heat insulation member 170 is made of a heat insulation material, and the heat insulation material may be, but is not limited to, glass fiber, asbestos, rock wool, and silicate. In these embodiments, the thermal management module 140 and the battery 120 may be disposed opposite each other. For example, along the depth direction of the box 110, the low-voltage power distribution module 130, the thermal management module 140, the second heat insulation member 170, and the battery 120 are sequentially stacked.

In some embodiments, the second heat insulation member 170 is a plate-like structure, where a plate surface of the second heat insulation member 170 is a second reference surface, and a projection of the battery 120 along a direction perpendicular to the plate surface of the second heat insulation member 170 is located within the second reference surface. In other words, the second heat insulation member 170 can cover the entire battery 120.

By adopting the above technical solution, heat generated by operation of the thermal management module 140 is effectively prevented from being transferred to the battery 120, effectively reducing the risk of thermal runaway of the battery 120, thereby effectively improving the reliability of the control apparatus 100.

In some embodiments of the present application, referring to FIG. 3, the battery 120 further includes a protection member 122, the protection member 122 covers a side of the battery body 121 facing the low-voltage power distribution module 130 and/or a side of the battery body 121 facing the thermal management module 140.

The protection member 122 is a component configured to protect the battery body 121. The protection member 122 is made of a rigid material, where the rigid material includes, but is not limited to, aluminum, aluminum alloy, copper, iron, stainless steel, and hard plastic. The protection member 122 may be a plate-like structure. In some embodiments, the protection member 122 and the battery body 121 may be connected into an integral body. For example, the protection member 122 is connected to the battery body 121 through a fastener. Certainly, in other embodiments, the protection member 122 may be spaced apart from the battery body 121.

In some embodiments, along the depth direction of the box 110, the low-voltage power distribution module 130, the thermal management module 140, and the battery 120 are sequentially stacked, and the protection member 122 covers a side of the battery body 121 facing the thermal management module 140.

In some other embodiments, along the depth direction of the box 110, the thermal management module 140, the low-voltage power distribution module 130, and the battery 120 are sequentially stacked, and the protection member 122 covers a side of the battery body 121 facing the low-voltage power distribution module 130.

By adopting the above technical solution, under a condition that an electronic element on the low-voltage power distribution module 130 and/or an electronic element on the thermal management module 140 explodes, fragments can be effectively prevented from impacting the battery body 121, effectively providing protection for the battery body 121, thereby effectively improving the reliability of the control apparatus 100.

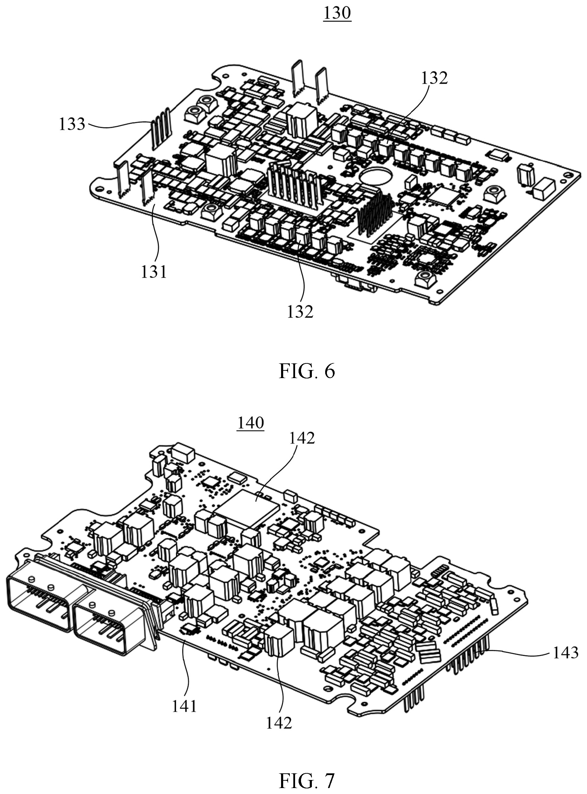

In some embodiments of the present application, referring to FIG. 6, the low-voltage power distribution module 130 includes a first circuit board 131, a low-voltage distribution circuit, and a battery management circuit. The low-voltage distribution circuit is electrically connected to the battery 120, the low-voltage distribution circuit is further configured to be electrically connected to the electric appliance 200, the battery management circuit is electrically connected to the battery 120, and the low-voltage distribution circuit and the battery management circuit are integrated on the first circuit board 131. In other words, the low-voltage distribution circuit and the battery management circuit are integrated on the same circuit board.

The first circuit board 131 is a carrier for the low-voltage power distribution module 130, configured to provide connection space for multiple first electrical wires and multiple first electronic elements 132 of the low-voltage power distribution module 130. The low-voltage distribution circuit is a circuit structure configured to distribute the electrical energy provided by the battery 120 to various electric appliances 200. The battery management circuit is a circuit structure configured to perform sampling control on the battery 120.

By integrating the low-voltage distribution circuit and the battery management circuit on the first circuit board 131, an integration degree of the control apparatus 100 is effectively increased, the volume of the control apparatus 100 is further reduced, and thus the space utilization rate of the vehicle 1000 using the above control apparatus 100 is further increased.

In some embodiments of the present application, referring to FIG. 7, the thermal management module 140 includes a second circuit board 141, a thermal management circuit, and a battery management circuit. The thermal management circuit is configured to be electrically connected to the thermal management actuator, the battery management circuit is electrically connected to the battery 120, and the thermal management circuit and the battery management circuit are integrated on the second circuit board 141. In other words, the thermal management circuit and the battery management circuit are integrated on the same circuit board.

The second circuit board 141 is a carrier for the thermal management module 140, configured to provide connection space for second electrical wires and multiple second electronic elements 142 of the thermal management module 140. The thermal management circuit is a circuit structure configured to drive and control operation of thermal management actuators such as a water pump, a flow valve, a fan motor, and an air conditioning compressor. The battery management circuit is a circuit structure configured to perform sampling control on the battery 120.

By integrating the thermal management circuit and the battery management circuit on the second circuit board 141, an integration degree of the control apparatus 100 is effectively increased, the volume of the control apparatus 100 is further reduced, and thus the space utilization rate of the vehicle 1000 using the above control apparatus 100 is further increased.

In some embodiments of the present application, the control apparatus 100 includes a third circuit board and a battery management circuit; the low-voltage power distribution module 130 includes a low-voltage distribution circuit, the low-voltage distribution circuit is electrically connected to the battery 120, and the low-voltage distribution circuit is further configured to be electrically connected to the electric appliance 200; the thermal management module 140 includes a thermal management circuit, and the thermal management circuit is configured to be electrically connected to the thermal management actuator; and the battery management circuit is electrically connected to the battery 120. The low-voltage distribution circuit, the thermal management circuit, and the battery management circuit are integrated on the third circuit board. In other words, the low-voltage distribution circuit, the thermal management circuit, and the battery management circuit are integrated on the same circuit board.

In some embodiments of the present application, the control apparatus 100 is disposed in a front engine compartment of the vehicle body 300. The control apparatus 100 includes a box 110, a battery 120, a low-voltage power distribution module 130, a thermal management module 140, and a cooling module 150. The battery 120 is a storage battery. The low-voltage power distribution module 130 is configured to distribute the electrical energy provided by the battery 120 to low-voltage electric appliances such as a dashboard, an in-vehicle information system, vehicle lights, electric seats, audio, and a steering machine. The thermal management module 140 is configured to drive and control operation of thermal management actuators such as a water pump, a flow valve, a fan motor, and an air conditioning compressor. The low-voltage power distribution module 130, the cooling module 150, the thermal management module 140, and the battery 120 are sequentially stacked along a depth direction of the box 110. The cooling module 150 includes a liquid cooling plate 151, a liquid inlet joint 152, and a liquid outlet joint 153. A cooling flow channel is provided inside the liquid cooling plate 151. The low-voltage power distribution module 130 and the thermal management module 140 are in thermal-conduction connection with the liquid cooling plate 151, the liquid inlet joint 152 is connected to a liquid inlet end of the cooling flow channel, and the liquid outlet joint 153 is connected to a liquid outlet end of the cooling flow channel. The low-voltage power distribution module 130 includes a first circuit board 131, a low-voltage distribution circuit, and a battery management circuit. The low-voltage distribution circuit is electrically connected to the battery 120, the low-voltage distribution circuit is further configured to be electrically connected to the electric appliance 200, the battery management circuit is electrically connected to the battery 120, and the low-voltage distribution circuit and the battery management circuit are integrated on the first circuit board 131.

According to a second aspect, referring to FIG. 1, an embodiment of the present application provides an electric device, including an electric appliance 200 and the control apparatus 100 as described in any one of the above embodiments, where the electric appliance 200 is electrically connected to the control apparatus 100.

The electric device provided by this embodiment of the present application adopts the control apparatus 100 as described in any one of the above embodiments, thereby effectively increasing the space utilization rate of the electric device.

The above descriptions are only preferred embodiments of the present application and are not intended to limit the present application. Any modifications, equivalent substitutions, improvements, and the like made within the spirit and principles of the present application shall be included in the protection scope of the present application.

## Claims

1. A control apparatus, **characterized in that**: the control apparatus comprises a box, a battery, a low-voltage power distribution module, and a thermal management module, wherein the battery is electrically connected to the low-voltage power distribution module, the low-voltage power distribution module is configured to be electrically connected to an electric appliance, and the battery, the low-voltage power distribution module, and the thermal management module are accommodated in the box.

2. The control apparatus according to claim 1, **characterized in that**: the control apparatus further comprises a cooling module, wherein the cooling module is disposed between the low-voltage power distribution module and the thermal management module, and the low-voltage power distribution module and the thermal management module are in thermal-conduction connection with the cooling module.

3. The control apparatus according to claim 2, **characterized in that**: the cooling module comprises a liquid cooling plate, a liquid inlet joint, and a liquid outlet joint, wherein a cooling flow channel is provided inside the liquid cooling plate, the low-voltage power distribution module and the thermal management module are in thermal-conduction connection with the liquid cooling plate, the liquid inlet joint is connected to a liquid inlet end of the cooling flow channel, and the liquid outlet joint is connected to a liquid outlet end of the cooling flow channel.

4. The control apparatus according to claim 3, **characterized in that**: a sidewall of the box is provided with a first socket, wherein an inner edge of the first socket is provided with a first sealing groove, the liquid inlet joint comprises a first sealing portion disposed in the first socket, a first rib protrudes from a peripheral side of the first sealing portion, and the first rib is inserted into the first sealing groove.

5. The control apparatus according to claim 4, **characterized in that**: a second rib and a third rib protrude from the peripheral side of the first sealing portion, wherein the second rib, the first rib, and the third rib are spaced apart along a length direction of the liquid inlet joint, the second rib abuts against an outer wall of the box, and the third rib abuts against an inner wall of the box.

6. The control apparatus according to any one of claims 3 to 5, **characterized in that**: a sidewall of the box is provided with a second socket, wherein an inner edge of the second socket is provided with a second sealing groove, the liquid outlet joint comprises a second sealing portion disposed in the second socket, a fourth rib protrudes from a peripheral side of the second sealing portion, and the fourth rib is inserted into the second sealing groove.

7. The control apparatus according to claim 6, **characterized in that**: a fifth rib and a sixth rib protrude from the peripheral side of the second sealing portion, wherein the fifth rib, the fourth rib, and the sixth rib are spaced apart along a length direction of the liquid outlet joint, the fifth rib abuts against the outer wall of the box, and the sixth rib abuts against the inner wall of the box.

8. The control apparatus according to any one of claims 3 to 7, **characterized in that**: the control apparatus further comprises a box cover covering an open end of the box, wherein an annular rib protrudes from a side of the box cover facing the box, a third sealing groove extending along a circumferential direction of the open end is provided at the open end, and the annular rib is inserted into the third sealing groove.

9. The control apparatus according to claim 8, **characterized in that**: the open end is provided with a first socket and a second socket, wherein the liquid inlet joint comprises a first sealing portion disposed in the first socket; the first sealing portion is provided with a fourth sealing groove; the liquid outlet joint comprises a second sealing portion disposed in the second socket; the second sealing portion is provided with a fifth sealing groove; the third sealing groove, the fourth sealing groove, and the fifth sealing groove are in communication to form an annular groove; and the annular rib is inserted into the annular groove.

10. The control apparatus according to any one of claims 3 to 9, **characterized in that**: the liquid cooling plate is provided with an avoidance opening, wherein the low-voltage power distribution module has a first wiring terminal, the thermal management module has a second wiring terminal, and the first wiring terminal and/or the second wiring terminal passes through the avoidance opening.

11. The control apparatus according to any one of claims 2 to 10, **characterized in that**: the low-voltage power distribution module, the cooling module, and the thermal management module are connected into an integral body.

12. The control apparatus according to claim 1, **characterized in that**: the control apparatus further comprises a box cover, wherein the box cover comprises a cover body covering an open end of the box, and the cover body is a metal member.

13. The control apparatus according to claim 12, **characterized in that**: the low-voltage power distribution module and/or the thermal management module is in thermal-conduction connection with the cover body.

14. The control apparatus according to claim 13, **characterized in that**: a heat conduction portion protrudes from a surface of the cover body facing the box, wherein the low-voltage power distribution module and/or the thermal management module is in thermal-conduction connection with the heat conduction portion.

15. The control apparatus according to any one of claims 12 to 14, **characterized in that**: the cover body is provided with a wiring opening, and the box cover further comprises an insulating member disposed in the wiring opening, wherein a wiring channel is provided inside the insulating member, the low-voltage power distribution module has a first wiring terminal, the thermal management module has a second wiring terminal, and the first wiring terminal and/or the second wiring terminal passes through the wiring channel.

16. The control apparatus according to claim 15, **characterized in that**: the insulating member is injection molded in the wiring opening.

17. The control apparatus according to any one of claims 1 to 16, **characterized in that**: the low-voltage power distribution module, the thermal management module, and the battery are stacked along a depth direction of the box.

18. The control apparatus according to any one of claims 1 to 17, **characterized in that**:
the control apparatus further comprises a first heat insulation member, wherein the first heat insulation member is disposed between the low-voltage power distribution module and the battery; and/or
the control apparatus further comprises a second heat insulation member, wherein the second heat insulation member is disposed between the thermal management module and the battery.

19. The control apparatus according to any one of claims 1 to 18, **characterized in that**: the battery comprises a battery body and a protection member, wherein the protection member covers a side of the battery body facing the low-voltage power distribution module and/or a side of the battery body facing the thermal management module.

20. The control apparatus according to any one of claims 1 to 19, **characterized in that**:
the low-voltage power distribution module comprises a first circuit board, a low-voltage distribution circuit, and a battery management circuit, wherein the low-voltage distribution circuit and the battery management circuit are integrated on the first circuit board; or
the thermal management module comprises a second circuit board, a thermal management circuit, and a battery management circuit, wherein the thermal management circuit and the battery management circuit are integrated on the second circuit board; or
the control apparatus comprises a third circuit board and a battery management circuit, wherein the low-voltage power distribution module comprises a low-voltage distribution circuit, the thermal management module comprises a thermal management circuit, and the low-voltage distribution circuit, the thermal management circuit, and the battery management circuit are integrated on the third circuit board.

21. The control apparatus according to any one of claims 1 to 20, **characterized in that**: the thermal management module is configured to be electrically connected to a thermal management actuator.

22. An electric device, **characterized in that**: the electric device comprises an electric appliance and the control apparatus according to any one of claims 1 to 21, wherein the electric appliance is electrically connected to the control apparatus.
